# EUROPEAN PATENT APPLICATION

(11) **EP 4 815 047 A1**
(43) Date of publication of application: **30.09.2026**
(21) Application number: 26165277.0
(22) Date of filing: 17.03.2026
(51) Int. Cl.: H01M 4/13, H01M 4/36, H01M 4/62, H01M 10/0525

(54) **NEGATIVE ELECTRODE AND SECONDARY BATTERY COMPRISING THE NEGATIVE ELECTRODE**

(30) Priority: 27.03.2025 KR 20250039749
(71) Applicant: SK On Co., Ltd., Seoul 03161 (KR)
(72) Inventor: HWANG, Hye Won, 34124 Daejeon (KR); PARK, Sung Jun, 34124 Daejeon (KR); JO, Yeong Min, 34124 Daejeon (KR); JEON, Chi Won, 34124 Daejeon (KR)
(74) Representative: Prüfer & Partner mbB Patentanwälte · Rechtsanwälte

(57) **Abstract**

Provided is a negative electrode and a secondary battery including the negative electrode, the negative electrode including: a negative electrode current collector; a first negative electrode mixture layer on the negative electrode current collector; and a second negative electrode mixture layer on the first negative electrode mixture layer, wherein the first negative electrode mixture layer includes an adhesive binder, a water-soluble polymer binder, and a curing binder, and the second negative electrode mixture layer includes an adhesive binder and a water-soluble polymer binder.

## Description

### CROSS-REFERENCE TO RELATED APPLICATION(S)

This application claims benefit of priority to Korean Patent Applications No. 10-2025-0039749 filed on March 27, 2025, in the Korean Intellectual Property Office, the disclosure of which is incorporated herein by reference in its entirety.

### BACKGROUND

### 1. FIELD

The present disclosure relates to a negative electrode for a secondary battery and a secondary battery including the negative electrode.

### 2. DESCRIPTION OF RELATED ART

Lithium secondary batteries are generally manufactured by forming a negative electrode slurry containing a binder together with a negative electrode active material. As the binder, a water-soluble polymer binder of a cellulose type, such as carboxyl methyl cellulose (CMC), and an adhesive binder, such as styrene butadiene rubber (SBR), are used, and the negative electrode active material and the binders are dispersed in an aqueous solvent such as deionized water to produce a negative electrode slurry.

The water-soluble polymer binder such as the carboxymethyl cellulose itself exhibits some dispersibility in some aqueous solvents, and thus can contribute to partially improving the dispersibility of the negative electrode slurry and enhancing the energy density of the lithium secondary battery.

However, when a content of the polymer binder is increased to increase the dispersibility of a negative electrode active material in the negative electrode slurry, such as a conductive material and a binder that can be optically added, a weight ratio of the negative electrode active material may be reduced, which may result in a decrease in capacity and deterioration in battery characteristics.

In addition, the increase in the content of the polymer binder may cause an increase in the viscosity of the negative electrode slurry, so it is necessary to increase an amount of water used as a solvent, which may cause a decrease in a solids content in the negative electrode slurry. When the solids content in the negative electrode slurry is low, it may have a negative effect not only on a process for manufacturing a negative electrode, but also on the quality of the manufactured negative electrode.

### SUMMARY

An aspect of the present disclosure is to provide a negative electrode capable of improving the properties of a negative electrode and the performance of a secondary battery.

According to an aspect of the present disclosure, provided is a negative electrode for a secondary battery, the negative electrode including: a negative electrode current collector; a first negative electrode mixture layer on the negative electrode current collector; and a second negative electrode mixture layer on the first negative electrode mixture layer, wherein the first negative electrode mixture layer may include an adhesive binder, a water-soluble polymer binder, and a curing binder, and the second negative electrode mixture layer may include an adhesive binder and a water-soluble polymer binder.

The curing binder and water-soluble polymer binder may be mutually cross-linked bonds.

The first negative electrode mixture layer may include 5 to 50 parts by weight of a curing binder based on 100 parts by weight of a water-soluble polymer binder included in the first negative electrode mixture layer.

The first negative electrode mixture layer may include a curing binder and a water-soluble polymer binder in a total content of 0.5 to 1.5 wt% based on a total weight of the first negative electrode mixture layer.

The first negative electrode mixture layer may include 0.5 to 5 wt% of an adhesive binder.

The first negative electrode mixture layer may include an adhesive binder, a water-soluble polymer binder, and a curing binder in a total content of 1.0 to 6.5 wt%.

A content of the water-soluble polymer binder included in the second negative electrode mixture layer may be greater than a content of the water-soluble polymer binder included in the first negative electrode mixture.

The second negative electrode mixture layer may include a water-soluble polymer binder in a content of 0.5 to 1.5 wt% based on a total weight of the second negative electrode mixture layer.

The second negative electrode mixture layer may include an adhesive binder in a content of 2.5 wt% or less based on the total weight of the second negative electrode mixture layer.

The second negative electrode mixture layer may include an adhesive binder and a water-soluble polymer binder in a total content of 0.5 to 4.0 wt% based on the total weight of the second negative electrode mixture layer.

A content of the binder included in the second negative electrode mixture layer may be 25% more or less a content of the binder included in the first negative electrode mixture layer.

The second negative electrode mixture layer may further include a curing binder.

The second negative electrode mixture layer may include 5 to 50 parts by weight of a curing binder per 100 parts by weight of a water-soluble polymer binder.

The first negative electrode mixture layer and the second negative electrode mixture layer may have a thickness ratio of 1:9 to 9:1.

The curing binder may be at least one selected from the group consisting of a carboxylic acid group-containing compound, an epoxy group-containing compound, a borate compound, and a thiol compound.

The carboxylic acid group-containing compound may be at least one selected from the group consisting of polyacrylic acid (PAA), citric acid, lactic acid, and fumaric acid.

The epoxy group-containing compound may be at least one selected from the group consisting of polyethylene glycol diglycidyl ether, sorbitol polyglycidyl ether, glycerol polyglycidyl ether, trimethylolpropane polyglycidyl ether, diglycerol polyglycidyl ether, and polyglycerol polyglycidyl ether.

The negative electrode may be divided into four equal parts in a thickness direction of the negative electrode, and when cohesion thereof in each region is measured at the center of the thickness of each region, respectively, and an average value thereof referred to as average cohesion, the average cohesion may be 0.11kN/m or more.

The negative electrode may have average adhesive strength of 0.2 N or more between the negative electrode current collector and the first negative electrode mixture layer.

Another aspect of the present disclosure is to provide a secondary battery, wherein the secondary battery may be a secondary battery including at least one negative electrode according to each of the embodiments.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a diagram schematically illustrating a cross-section of a multilayer negative electrode according to an embodiment of the present disclosure;
FIG. 2 is a graph illustrating the results of measuring adhesive strength between a negative electrode current collector and a negative electrode mixture layer in negative electrodes of Examples 1 to 4 and Comparative Example 1;
FIG. 3 is a graph illustrating the results of measuring cohesion by depth from a surface of the negative electrode mixture layer toward the negative electrode current collector in the negative electrodes of Examples 1 to 4 and Comparative Example 1; and
FIG. 4 is a graph illustrating a change in a capacity retention rate over charging and discharging cycles in negative electrodes of Examples 1 to 4 and Comparative Example 1.

### DETAILED DESCRIPTION

Hereinafter, the present disclosure will be described in detail. However, these are merely examples and the present disclosure is not limited to the specific embodiments described as examples.

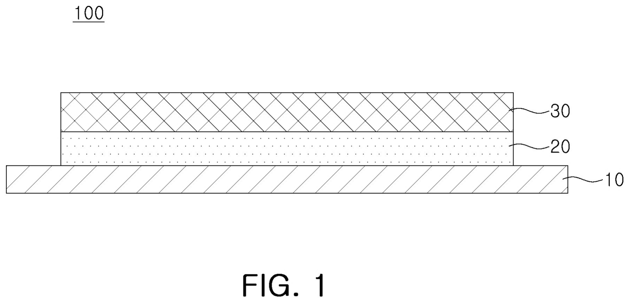

An embodiment of the present disclosure relates to a negative electrode, and the multilayer negative electrode may be a multilayer negative electrode 100 including a negative electrode current collector 10, a first negative electrode mixture layer 20 on the negative electrode current collector, and a second negative electrode mixture layer 30 on the first negative electrode mixture layer, as schematically illustrated in FIG. 1.

The first negative electrode mixture layer may include an adhesive binder, a water-soluble polymer binder, and a curing binder, and the second negative electrode mixture layer may include an adhesive binder and a water-soluble polymer binder.

Specifically, the first negative electrode mixture layer and the second negative electrode mixture layer may include an adhesive binder and a water-soluble polymer binder.

The adhesive binder may be a polymer material having an adhesive function binding raw material particles such as a negative electrode active material and/or a conductive material within the negative electrode mixture layer, and firmly adhering the raw material particles to a current collector. For example, the adhesive binder may have adhesive strength between the negative electrode mixture layer and the negative electrode current collector of 0.1 N or more. The adhesive strength may be measured by a 90° peel test, and specifically, the adhesive strength may be measured by attaching 3M tape having a width of 18 mm to a surface of the mixture layer on the electrode and peeling the same off at a 90° angle. The adhesive binder is not limited thereto, but, for example, may include a rubber-based binder and an acrylic-based binder.

The rubber-based binder may have at least one hydrophilic group. Examples of the hydrophilic group may include a phosphoric acid group, a sulfonic acid group, a carbonyl group (-C(=O)-), a hydroxyl group (-OH), an ether group (-O-), and a carboxyl group (-C(=O)-OH), but an embodiment thereof is not limited thereto. The rubber-based binder may be, for example, acrylated styrene-butadiene rubber, acrylonitrile-butadiene-styrene rubber, acrylic rubber, butyl rubber, or fluoroelastomer, but an embodiment thereof is not limited thereto.

The acrylic-based binder may be an acrylic polymer or copolymer, and examples thereof may include poly(meth)acrylate, polyalkyl(meth)acrylate, and polyacrylonitrile.

The adhesive binder included in the first negative electrode mixture layer and the adhesive binder included in the second negative electrode mixture layer may be the same or different.

The water-soluble polymer binder may perform cross-linking with a third binder. The water-soluble polymer binder may be different from the rubber-based binder, and may have at least one hydrophilic group. For example, the water-soluble polymer binder may be a cellulose ether compound. More specifically, the water-soluble polymer binder may be methyl cellulose, hydroxyethyl cellulose, hydroxypropyl cellulose, methyl hydroxyethyl cellulose, methyl hydroxypropyl cellulose, or the like.

The water-soluble polymer binder included in the first negative electrode mixture layer and the water-soluble polymer binder included in the second negative electrode mixture layer may be the same or different.

Although not limited thereto, the negative electrode mixture layer includes a negative electrode active material and a binder, and may further include additives such as a conductive material as needed. Specifically, the negative electrode may be manufactured by preparing a negative electrode slurry including solids and a solvent including the negative electrode active material, a binder, and an additive that can be added as needed, and applying and drying the negative electrode slurry on a negative electrode current collector.

The negative electrode slurry may be manufactured by preparing a pre-dispersed binder solution using a water-soluble polymer binder such as carboxymethyl cellulose (CMC), for example, and adding a negative electrode active material and an additive as needed to the pre-dispersed binder solution.

The water-soluble polymer binder can achieve a rapid increase in viscosity even in a small amount, so that the dispersion stability of the negative electrode slurry may be secured by using a pre-dispersed solution of the water-soluble polymer binder as described above.

However, the increase in the content of the water-soluble polymer binder as described above relatively reduces the solids content of the negative electrode active material, or the like, which may lead to a decrease in battery capacity and deterioration in battery characteristics, and requires the use of large amounts of water. Such use of large amounts of solvents may result in increased energy consumption for drying a slurry during the battery manufacturing process.

In order to increase battery capacity, reduce energy consumption, and the like, the content of the water-soluble polymer binder may be reduced, but if the amount of the water-soluble polymer binder used is reduced to increase the solids content, the viscosity of the slurry decreases, which may reduce the processability of slurry application, and the quality of the negative electrode may not be secured, such as cracks occurring in the manufactured negative electrode or the adhesive strength between the negative electrode current collector and the negative electrode mixture layer decreasing.

A method for reducing the amount of the water-soluble polymer binder used while maintaining or improving coating processability and quality of the negative electrode during manufacturing a negative electrode may be required. Accordingly, as an embodiment of the present disclosure, the first negative electrode mixture layer formed on the negative electrode current collector may further include a curing binder together with the adhesive binder and the water-soluble polymer binder.

The curing binder may be a polymer compound having at least one crosslinkable functional group, such as a carboxyl group or a hydroxyl group, associated with the water-soluble polymer. The functional group of the curing binder may perform a crosslinking reaction with the functional group of the water-soluble polymer binder by supplying energy, such as heat or light. For example, the curing binder may be an ester bond-type compound forming an ester bond with a carboxyl group of the water-soluble polymer, or an ether bond-type compound forming an ether bond with a hydroxyl group of the water-soluble polymer.

The ester bond-type compound may be a carboxylic acid compound, specifically a polyvalent carboxylic acid compound of two or more, and more specifically, an embodiment thereof is not limited thereto, but may be polyacrylic acid (PAA), citric acid, lactic acid, and fumaric acid.

The ether bond-type compound may be an epoxy-based compound, and specifically, the ether bond-type compound may be a compound containing two or more epoxy groups including polyglycidyl ether. Examples of the ether bond-type compound may include polyethylene glycol diglycidyl ether, sorbitol polyglycidyl ether, glycerol polyglycidyl ether, trimethylolpropane polyglycidyl ether, diglycerol polyglycidyl ether, and polyglycerol polyglycidyl ether.

In addition, the curing binder may be a third compound for bonding with a carboxyl group or hydroxyl group (-COOH/OH) of the water-soluble polymer binder, in addition to the ester bond-type compound and the ether bond-type compound. The third compound may be, but an embodiment thereof is not limited thereto, a borate compound, and more specifically, a metal borate compound, for example, sodium borate and zinc borate.

The curing binder is used as a substituent for a water-soluble polymer binder, thereby reducing an amount of the water-soluble polymer binder used. Such a reduction in the amount of the water-soluble polymer binder used may increase a solids content, and also reduce an amount of a solvent that should be evaporated during a drying process. Furthermore, due to the reduced content of the solvent, migration of the adhesive binder may be suppressed during the drying process, thereby improving cohesion within a negative electrode. In addition, due to the improvement of the adhesive strength and cohesion as described above, structural collapse of the negative electrode may be prevented during a charging and discharging process of a secondary battery, thereby improving the long-term stability of the battery.

In addition, by including the curing binder described above, adhesive strength and cohesion may be improved, thereby reducing the amount of binder used, particularly, the amount of the water-soluble polymer binder used, and further increasing the solids content relatively. In addition, reducing the amount of the water-soluble polymer binder used may reduce an amount of water used as a solvent in the negative electrode slurry. Therefore, it can contribute to improving a coating speed during a negative electrode manufacturing process, reducing an amount of energy used for drying during a drying process, and increasing an amount of slurry manufacturing and electrode production.

In the first negative electrode mixture layer, the water-soluble polymer binder and a curing binder may be present as a bond formed through a mutual cross-linking reaction. Some water-soluble polymer binders and curing binders may be present separately without cross-linking. A ratio thereof, present in the form of the bond may vary depending on the conditions of the cross-linking reaction and is not particularly limited.

As described above, the first negative electrode mixture layer formed on a negative electrode current collector may include an adhesive binder, a water-soluble polymer binder, and a curing binder as binders together with a negative electrode active material, and a total content of the binders may be 1.0 to 6.5 wt% based on the weight of the first negative electrode mixture layer.

The first negative electrode mixture layer may include 0.5 to 5 wt% of the adhesive binder based on the total weight of the first negative electrode mixture layer. If the content of the adhesive binder is less than 0.5 wt%, detachment of the negative electrode mixture layer and peeling from the negative electrode current collector layer may occur, and if the content of the adhesive layer exceeds 5 wt%, cell performance may rapidly decrease due to increased resistance.

The first negative electrode mixture layer may include the water-soluble polymer binder and the curing binder in a total content of 0.5 to 1.5 wt% based on a total weight of the first negative electrode mixture layer. If the total content of the water-soluble polymer binder and the curing binder is less than 0.5 wt%, the viscosity of a negative electrode slurry may be low, resulting in poor coating workability. If the total content of the water-soluble polymer binder and the curing binder exceeds 1.5 wt%, the viscosity of the slurry may be excessively high, resulting in reduced productivity of the electrode.

The curing binder is a component replacing a portion of the water-soluble polymer binder, and contents of a water-soluble polymer binder and a curing binder included in the first negative electrode mixture layer is not limited thereto, but may include in a range of 5 to 50 parts by weight of the curing binder per 100 parts by weight of the water-soluble polymer binder. That is, the water-soluble polymer binder and the curing binder may be included in a weight ratio of 20:1 to 2:1. If the weight ratio of the curing binder to the water-soluble polymer binder is less than 1/20, the content of the curing binder included in the first negative electrode mixture layer is too small, it may be difficult to obtain effects such as improved adhesive strength due to a curing reaction. If the weight ratio of curing binder to the water-soluble polymer binder exceeds 1/2, the content of the residual curing binder not participating in curing increases, which may act as resistance and deteriorate cell performance.

Since the first negative electrode mixture layer formed on the negative electrode current collector includes a curing binder together with the water-soluble polymer binder, the adhesive strength with the negative electrode current collector may be increased due to the crosslinking reaction by the curing binder despite a decrease in the content of the water-soluble polymer, and the cohesion between negative electrode active materials may be increased, and it is possible to suppress the occurrence of a decrease in electrode capacity due to volume expansion of the negative electrode during the charging and discharging process of the negative electrode.

The content of the water-soluble polymer binder may be reduced, and accordingly, the content of solids included in a slurry for manufacturing the first negative electrode mixture layer may be increased, thereby securing the properties of a negative electrode and cell performance, and reducing an amount of energy used for removing a solvent in the process for manufacturing the negative electrode.

The second negative electrode mixture layer may include a binder, such as an adhesive binder and a water-soluble polymer binder, along with the negative electrode active material. The total content of the binders included in the second negative electrode mixture layer may be 0.5 to 4.0 wt% based on the weight of the second negative electrode mixture layer.

The second negative electrode mixture layer may include the adhesive binder in a content of 2.5 wt% or less, based on the total weight of the second negative electrode mixture layer. In this case, the adhesive binder included in the second negative electrode mixture layer may be equal to or less than the adhesive binder included in the first negative electrode mixture layer. If the total content of the adhesive binder exceeds 2.5 wt%, it may act as resistance, resulting in deterioration of cell performance.

The second negative electrode mixture layer may include the water-soluble polymer binder in a content of 0.5 to 1.5 wt% based on the total weight of the second negative electrode mixture layer. If the content of the water-soluble polymer binder is less than 0.5 wt%, the viscosity of a negative electrode slurry may be low, resulting in poor coating workability. If the content of the water-soluble polymer binder exceeds 1.5 wt%, the viscosity of the slurry may be excessively high, reducing electrode productivity. As an example, the water-soluble polymer binder included in the second negative electrode mixture layer may be included in greater quantity than the water-soluble polymer binder included in the first negative electrode mixture layer.

The second negative electrode mixture layer may include a curing binder as needed. The curing binder may be included as a partial replacement for the water-soluble polymer binder included in the second negative electrode mixture layer. When the second negative electrode mixture layer further includes a curing binder, the contents of the water-soluble polymer binder and the curing binder included in the second negative electrode mixture layer is not limited thereto, but may include 5 to 50 parts by weight of the curing binder per 100 parts by weight of the water-soluble polymer binder. That is, the water-soluble polymer binder and the curing binder may be included in a weight ratio of 20:1 to 2:1. If the weight ratio of the curing binder to the water-soluble polymer binder is less than 1/20, the content of the curing binder included in the second negative electrode mixture layer may be too small, making it difficult to obtain effects such as improved adhesive strength due to a curing reaction. If the weight ratio of the curing binder to the water-soluble polymer binder exceeds 1/2, the content of the residual curing binder not participating in curing increases, which may act as resistance and deteriorate cell performance.

According to an embodiment, the negative electrode may have the same total content of the binders included in the first negative electrode mixture layer and the same total content of the binders included in the second negative electrode mixture layer, or may have different total contents of the binders included in the first negative electrode mixture layer and the binders included in the second negative electrode mixture layer. For example, the contents of the binders included in the second negative electrode mixture layer may be 25% more or less than the contents of the binders in the first negative electrode mixture layer. For example, if the total content of the binders included in the first negative electrode mixture layer is 2 wt%, the content of the binders included in the second negative electrode mixture layer may be 1.5 wt% to 2.25 wt.

The first negative electrode mixture layer and the second negative electrode mixture layer may have a thickness ratio of 1:9 to 9:1, but an embodiment thereof is not limited thereto. If a thickness ratio of the first negative electrode mixture layer or the second negative electrode mixture layer to a total thickness of the negative electrode mixture layer is less than 1, the effects that can be obtained by forming the layer as a multilayer structure, may not be fully realized, and in addition, the thickness ratio may vary depending on the total thickness of the negative electrode mixture layer, but it may not be easy to control the same in the thickness ratio as described above.

According to an embodiment of the present disclosure, a negative electrode includes a curing binder in a first negative electrode mixture layer formed on a negative electrode current collector, and adhesive strength with the negative electrode current collector may be improved by cross-linking of the curing binder. The negative electrode including the curing binder may have an average adhesive strength between the first negative electrode mixture layer and the negative electrode current collector of 0.2 N or more. Specifically, the negative electrode may have adhesive strength between the first negative electrode mixture layer and the negative electrode current collector of 0.37 N or more, 0.38 N or more, 0.52 N or more, 0.53 N or more, or 0.55 N or more.

The adhesive strength may be measured by a 90° peel test, and specifically, the adhesive strength may be measured by attaching 3M tape having a width of 18 mm to a surface of the mixture layer on the electrode and peeling the same off at a 90° angle.

According to an embodiment of the present disclosure, a negative electrode includes a curing binder in the first negative electrode mixture layer, and cohesion between negative electrode active materials may be improved by cross-linking of the curing binder. Therefore, the negative electrode including the curing binder may have an average cohesion of 0.11 kN/m or more. The cohesion may be measured using a Surface and Interfacial Cutting Analysis System (SAICAS) device, and is a value expressed as an average value obtained by measuring cohesion at the center of a thickness of each region thereof when a negative electrode mixture layer formed on one surface of the negative electrode current collector is divided into four equal parts in the thickness direction, and averaging each measured value thereof.

As described above, according to an embodiment of the present disclosure, a negative electrode may include a curing binder together with a water-soluble polymer binder in a portion of a negative electrode mixture layer, particularly in a negative electrode mixture layer disposed on a negative electrode current collector, thereby improving the adhesive strength of the negative electrode mixture layer to the negative electrode current collector, and improving the cohesion between negative electrode active materials, thereby preventing a structure of the negative electrode mixture layer from collapsing even if shrinkage and expansion occur during the charging and discharging process of a negative electrode, thereby improving the long-term life stability of the negative electrode.

As described above, the negative electrode of the present disclosure may be manufactured by preparing a negative electrode slurry including a solids content and a solvent including a negative electrode active material, a binder, and an additive that can be added as needed, and applying and drying the negative electrode slurry on a negative electrode current collector.

The negative electrode current collector may include stainless steel, copper, nickel, titanium, or an alloy thereof. The negative electrode current collector may also include copper surface-treated with carbon, nickel, titanium, or silver, or stainless steel surface-treated with carbon, nickel, titanium, or silver. In addition, the negative electrode current collector may be a polymer substrate coated with a conductive metal such as nickel, aluminum, titanium, or silver.

The negative electrode current collector may have various forms, such as foil, foam, net, porous body, non-woven fabric, or the like, as a nonlimiting example. In addition, the negative electrode current collector may have a thickness of 10 to 50 µm, but an embodiment thereof is not limited thereto.

The negative electrode mixture layer may include a negative electrode active material. A material that can adsorb and desorb lithium ions may be used as the negative electrode active material. For example, the negative electrode active material may include carbon-based materials such as crystalline carbon, amorphous carbon, carbon composites, and carbon fiber; lithium metal; lithium alloys; silicon (Si)-containing materials; or tin (Sn)-containing materials.

Examples of the amorphous carbon include hard carbon, soft carbon, coke, mesocarbon microbead (MCMB), mesophase pitch-based carbon fiber (MPCF), and the like.

Examples of the crystalline carbon include graphite-based carbons such as natural graphite, artificial graphite, graphitized coke, graphitized MCMB, graphitized MPCF, and the like.

The lithium metal may be pure lithium metal or lithium metal having a protective layer formed thereon to suppress dendrite growth, or the like. In an embodiment, a lithium metal-containing layer deposited or coated on a negative electrode current collector may be used as a negative electrode active material layer. In an embodiment, a lithium thin film layer may also be used as a negative electrode active material layer.

Elements included in the lithium alloy include aluminum, zinc, bismuth, cadmium, antimony, silicon, lead, tin, gallium, indium, or the like.

The silicon-containing material may provide increased capacity characteristics. The silicon-containing material may include Si, SiOx (0<x<2), metal-doped SiOx (0<x<2), a silicon-carbon composite, or the like. The metal may include lithium and/or magnesium, and the metal-doped SiOx (0<x<2) may include a metal silicate.

The negative electrode active material may specifically include graphite, for example, natural graphite, artificial graphite, or a mixture of natural graphite and artificial graphite, and may additionally include a silicon-based negative electrode active material.

The negative electrode mixture layer may optionally further include a conductive material. The conductive material is not limited thereto, but may include, for example, carbon-based conductive materials such as graphite, carbon black, acetylene black, Ketjen black, graphene, carbon nanotubes, vapor-grown carbon fiber (VGCF), carbon fiber, and the like, and/or metal-based conductive materials including perovskite materials such as tin, tin oxide, titanium oxide, LaSrCoO₃, LaSrMnO₃, and the like, but an embodiment thereof is not limited thereto.

In an embodiment, the conductive material may be included in a content of about 0.05 to about 0.2 wt% based on a total weight of the negative electrode mixture layer.

The negative electrode slurry may be prepared, for example, by mixing the negative electrode active material and a binder in a solvent. More specifically, a water-soluble binder may be added to a solvent to prepare a binder pre-dispersion liquid, and a negative electrode slurry may be prepared by adding a negative electrode active material and an adhesive binder or a curing binder to the binder pre-dispersion liquid.

The solvent may include, for example, water, pure water, deionized water, distilled water, ethanol, isopropanol, methanol, acetone, n-propanol, t-butanol, and the like, but an embodiment thereof is not limited thereto.

The negative electrode slurry may have a solids content of 30 to 60 wt%, but an embodiment thereof is not limited thereto. If the solids content of the negative electrode slurry is less than 30 wt%, the viscosity of the negative electrode slurry may be too low to ensure coating processability, and a lot of time and energy may be required for a drying process to remove the solvent. If the solids content of the negative electrode slurry exceeds 60 wt%, the viscosity of the slurry may be too high, resulting in poor dispersibility and difficulty in coating the slurry.

After the negative electrode slurry is coated and deposited on a negative electrode current collector, the negative electrode slurry may be dried and rolled to manufacture a negative electrode mixture layer. The coating process may be performed by methods such as gravure coating, slot die coating, multilayer simultaneous die coating, imprinting, doctor blade coating, dip coating, bar coating, casting, and the like, but an embodiment thereof is not limited thereto.

Furthermore, a negative electrode slurry (first negative electrode slurry) forming a first negative electrode mixture layer and a negative electrode slurry (second negative electrode slurry) forming a second negative electrode mixture layer may be coated simultaneously on the negative electrode current collector, or after a first negative electrode slurry is applied, a second negative electrode slurry may be coated continuously or separately at different times and then dried simultaneously, or after a first negative electrode slurry may be applied and dried, and then a second negative electrode slurry may be applied and dried.

According to another aspect of the present disclosure, provided is a secondary battery including the negative electrode of each embodiment as described above. The secondary battery may include the negative electrode and a positive electrode, and may also include a separator disposed between the negative electrode and the positive electrode.

### Examples

Hereinafter, embodiments of the present disclosure are further described with reference to specific experimental examples. The examples and comparative examples included in the experimental examples are intended to illustrate the present disclosure and do not limit the scope of the appended claims. It will be apparent to those skilled in the art that various modifications and variations to the examples are possible within the scope and technical spirit of the present disclosure, and it is also understood that such modifications and variations fall within the scope of the appended claims.

### Example 1

A first negative electrode slurry (solids content 51.9 wt%) was prepared by mixing 93.80 wt% of graphite and 2 wt% of SiOx (0<x<2) as negative electrode active materials, 0.6 wt% of CNT as a conductive material, 2.4 wt% of styrene butadiene rubber (SBR) as an adhesive binder, 1.0 wt% of carboxymethyl cellulose (CMC) as a water-soluble polymer binder, and 0.2 wt% of polyethylene glycol diglycidyl ether (PEGDE) as a curing binder (20 wt% relative to 100 wt% of CMC) with water as a solvent.

A second negative electrode slurry (solids content 39.3 wt%) was prepared by mixing 83.95 wt% of graphite and 14 wt% of SiOx (0<x<2) as negative active materials, 0.25 wt% of carbon nanotube (CNT) as a conductive material, 0.6 wt% of SBR as an adhesive binder, and 1.2 wt% of CMC as a water-soluble polymer binder with water as a solvent.

A first negative electrode slurry was applied to both surfaces of a copper foil (8 µm thick) and dried to form a first negative electrode mixture layer, and a second negative electrode slurry was applied to the first negative electrode mixture layer and dried to form a second negative electrode mixture layer, thereby manufacturing a negative electrode having a thickness of 60 µm and a thickness of 60 µm for the first negative electrode mixture layer and a thickness of 60 µm for the second negative electrode mixture layer, respectively.

The negative electrode was manufactured by coating (drying) at the fastest speed possible to obtain a good negative electrode without cracks on the surface, and a coating speed for obtaining a good negative electrode was 8 m/s.

### Example 2

A negative electrode was manufactured in the same manner as in Example 1, except that contents of CMC and PEGDE included in a first negative electrode slurry were adjusted as shown in Table 1 and a solids content thereof was changed.

A coating speed (drying speed) of the negative electrode was 6 m/s.

### Example 3

A negative electrode was manufactured in the same manner as in Example 1, except that contents of graphite, CMC and PEGDE included in a first negative electrode slurry were adjusted as shown in Table 1 and a solids content thereof was changed.

A coating speed (drying speed) of the negative electrode was 8 m/s.

### Example 4

A negative electrode was manufactured in the same manner as in Example 1, except that contents of CMC and PEGDE included in a first negative electrode slurry and a second negative electrode slurry were adjusted as shown in Table 1 and a solids content thereof was changed.

A coating speed (drying speed) of the negative electrode was 8 m/s.

### Comparative Example 1

A negative electrode was manufactured in the same manner as in Example 1, except that a solids content thereof was reduced by increasing a CMC content and increasing a solvent according to an increase in the content of CMC, without including PEGDE.

A coating speed (drying speed) of the negative electrode was 6 m/s.

**[Table 1]**

| | | Examp le 1 | Examp le 2 | Examp le 3 | Examp le 4 | Comparative Example 1 | |
|---|---|---|---|---|---|---|---|
| First negati ve electr ode slurry (weigh t %) | Graphite | 93.8 | 93.8 | 93.65 | 93.8 | 93.8 | |
| | SiOx | 2 | 2 | 2 | 2 | 2 | |
| | Conductive material | 0.6 | 0.6 | 0.6 | 0.6 | 0.6 | |
| | SBR | 2.4 | 2.4 | 2.4 | 2.4 | 2.4 | |
| | CMC | 1 | 1.1 | 0.9 | 1 | 1.2 | |
| | PEGDE | 0.2 | 0.1 | 0.45 | 0.2 | 0 | |
| | Solids content | 51.9 | 45.4 | 47.1 | 51.9 | 40.7 | |
| Second | Graphite | 83.95 | 83.95 | 83.95 | 83.95 | 83.6 | |
| negati ve electr ode slurry (weigh t %) | SiOx | | 14 | 14 | 14 | 14 | 14 |
| | Conductive material | | 0.25 | 0.25 | 0.25 | 0.25 | 0.6 |
| | SBR | | 0.6 | 0.6 | 0.6 | 0.6 | 0.6 |
| | CMC | | 1.2 | 1.2 | 1.2 | 1 | 1.2 |
| | PEGDE | | 0 | 0 | 0 | 0.2 | 0 |
| | Solids content | | 39.3 | 39.3 | 39.3 | 47.1 | 39.3 |
| Thickn ess | Negative electrode mixture layer(µm) | | 120 | 120 | 120 | 120 | 120 |
| | Thickness ratio | First negative electrode mixture layer | 50% | 50% | 50% | 50% | 50% |
| | | Second negative electrode mixture layer | 50% | 50% | 50% | 50% | 50% |

### [Physical Property Evaluation]

### -Adhesive strength-

For each negative electrode prepared in Examples 1 to 4 and Comparative Example 1, adhesive strength between a copper foil, which is a negative electrode current collector, a first negative electrode mixture layer was evaluated using the following method.

Using IMADA's DS2-50N, a tape with a width of 18 mm was attached to a negative electrode mixture layer and a 90° peel test was performed to measure a force required to detach the negative electrode mixture layer from the copper foil.

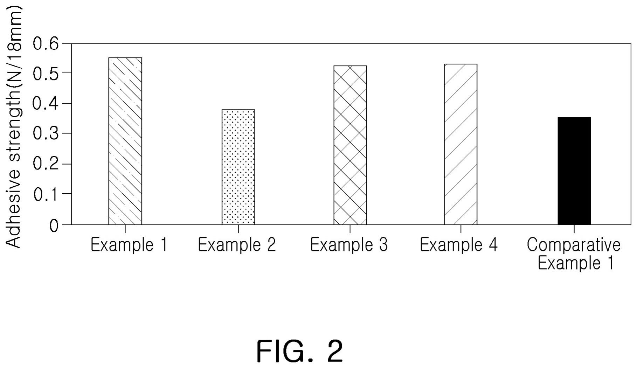

The results of the adhesive strength evaluation are shown in Table 2 and FIG. 2.

**[Table 2]**

| | Example 1 | Example 2 | Example 3 | Example 4 | Comparative Example 1 |
|---|---|---|---|---|---|
| Adhesive strength (N) | 0.55 | 0.38 | 0.52 | 0.53 | 0.35 |

As can be seen from Table 2 and FIG. 2, it could be seen that a negative electrode of Comparative Example 1 had adhesive strength of about 0.35 N between a copper foil and a first negative electrode mixture layer, while a negative electrode of Example 1 had adhesive strength of 0.55 N between the copper foil and the first negative electrode mixture layer, thereby illustrating a significant improvement in adhesive strength compared to Comparative Example 1.

Example 1 is a result obtained by replacing a curing binder with a CMC, a water-soluble binder, while reducing a CMC by a content of about 17%, compared to Comparative Example 1. By reducing a content of the CMC, a solids content of a slurry may be increased by 11.2 wt%, and thus a migration phenomenon in which binders such as a SBR float to an upper layer of a negative electrode during a drying process may be suppressed, and this can be explained as further improving the adhesive strength between the copper foil and the negative electrode mixture layer.

### -Cohesion-

Cohesion within a negative electrode mixture layer of each negative electrode manufactured in Examples 1 to 4 and Comparative Example 1 was evaluated using the following method.

A negative electrode mixture layer formed on one surface of the negative electrode collector was divided into four equal parts in a thickness direction and divided into four regions. Cohesion at the center of thickness of each region was measured using a Surface and Interfacial Cutting Analysis System (SAICAS) device, and average cohesion of the four regions was calculated and recorded as cohesion.

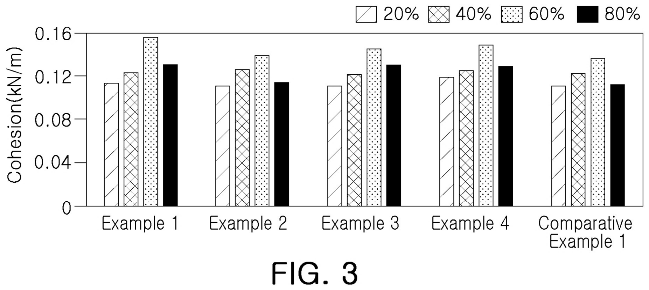

The results of the evaluation of the cohesion are shown in Table 3 and FIG. 3.

**[Table 3]**

| | Cohesion according to depth from surface(kN/m) | | | |
|---|---|---|---|---|
| | 20% | 40% | 60% | 80% |
| Example 1 | 0.114 | 0.124 | 0.156 | 0.132 |
| Example 2 | 0.112 | 0.126 | 0.140 | 0.114 |
| Example 3 | 0.111 | 0.122 | 0.145 | 0.130 |
| Example 4 | 0.119 | 0.125 | 0.150 | 0.129 |
| Comparative Example 1 | 0.112 | 0.123 | 0.137 | 0.113 |

As can be seen from Table 3 and FIG. 3 above, in an electrode of Example 1, cohesion, similar to that of Comparative Example 1 was exhibited at a depth of 20% and 40% of a thickness of an electrode mixture layer, which is an upper layer of the electrode, i.e., a second negative electrode mixture layer, but it could be confirmed that cohesion, significantly superior to that of Comparative Example 1 was exhibited at a depth of 60% and 80% of the thickness of the electrode mixture layer, corresponding to a first negative electrode mixture layer including a curing binder together with CMC.

From these results, it can be predicted that capacity reduction due to delamination of an active material even during repeated charging and discharging processes may be suppressed through a crosslinking reaction between CMC and a curing binder.

### - Capacity Retention Rate -

The negative electrodes manufactured in Examples 1 to 4 and Comparative Example 1 above were assembled using a polyolefin separator together with Li metal. Half-coin cells were manufactured by injecting an electrolyte containing 1 M LiPF₆ in a solvent containing ethylene carbonate (EC) and ethyl methyl carbonate (EMC) in a volume ratio of 30:70.

The manufactured batteries were charged to 5 mV at 0.1 C constant current at 25°C, and then charged once at constant voltage (CV) until a charging current reached 0.005 C. Then, the batteries were left for 30 minutes, and discharged at a constant current (CC) of 0.1 C until they reached 1.5 V.

The capacity retention rate was evaluated up to 300 cycles by repeating the charging and discharging at 0.5C.

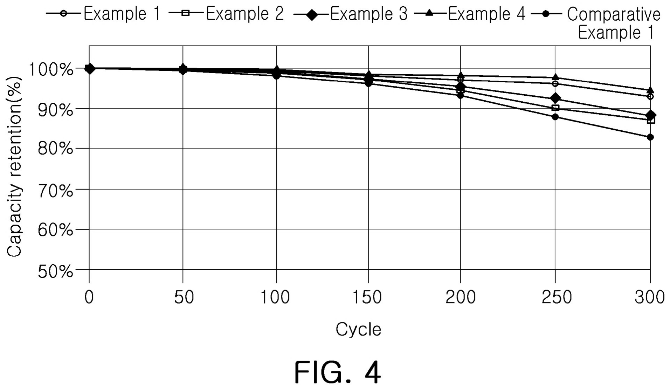

The evaluation results of the capacity retention rate are shown in Table 4 and FIG. 4.

**[Table 4]**

| Cycle | Example 1 | Example 2 | Example 3 | Example 4 | Comparative Example 1 |
|---|---|---|---|---|---|
| 0 | 100% | 100% | 100% | 100% | 100% |
| 50 | 99% | 99% | 99% | 99% | 99% |
| 100 | 99% | 98% | 98% | 99% | 98% |
| 150 | 98% | 96% | 97% | 98% | 96% |
| 200 | 97% | 94% | 95% | 98% | 93% |
| 250 | 96% | 90% | 92% | 97% | 88% |
| 300 | 93% | 87% | 88% | 94% | 83% |

As can be seen from Table 4 and FIG. 4, a battery including a negative electrode of Comparative Example 1 gradually decreased in capacity after 50 cycles by including a Si-based negative electrode active material, and showed a capacity retention rate of 83% after 300 cycles. However, it could be seen that a battery including a negative electrode of Example 1 showed a slight decrease in capacity after 100 cycles, but the decrease was slight up to 250 cycles, and the capacity retention rate at 300 cycles was evaluated to be 93%.

From these results, it could be seen that the capacity retention rate was significantly improved by suppressing a change in a volume of Si through the crosslinking reaction between CMC and the curing binder.

The above description is merely an example of applying the principles of the present disclosure, and other configurations may be included without departing from the scope of the present disclosure.

As set forth above, according to an embodiment of the present disclosure, even if a content of a water-soluble polymer binder is reduced, adhesive strength between a current collector and a negative electrode mixture layer and cohesion within the negative electrode mixture layer may be maintained or improved, and furthermore, the structural collapse of the negative electrode due to volume expansion of the negative electrode during charging/discharging of a battery may be prevented, thereby improving the long-term life stability of the battery.

According to another embodiment of the present disclosure, the content of the water-soluble polymer binder may be reduced, thereby increasing a solids content of a negative electrode slurry during a process for manufacturing a negative electrode, thereby improving a coating speed and coating quality, and also reducing an amount of energy used for solvent removal.

Furthermore, the negative electrode of the present disclosure may be widely applied in green technology fields such as electric vehicles, battery charging stations, and solar and wind power generation using batteries. In addition, the negative electrode of the present disclosure may be used in eco-friendly electric vehicles, hybrid vehicles, or the like, to ameliorate the effects of climate change by suppressing air pollution and greenhouse gas emissions.

The aforementioned description merely illustrates the technical concept of the present disclosure, and a person skilled in the art to which the present invention pertains may make various modifications and modifications without departing from the essential characteristics of the present disclosure.

Therefore, the example embodiments disclosed in this specification and drawings are not intended to limit but to explain the technical concept of the present disclosure, and the scope of the technical idea of the present disclosure is not limited by these example embodiments. The scope of protection of the present disclosure should be interpreted by the following claims, and all technical ideas within the scope equivalent thereto should be interpreted as being included in the scope of the present disclosure.

The present disclosure may also relate to the following aspects.

Aspect 1) A negative electrode may comprise a negative electrode current collector; a first negative electrode mixture layer on the negative electrode current collector; and a second negative electrode mixture layer on the first negative electrode mixture layer, wherein the first negative electrode mixture layer includes an adhesive binder, a water-soluble polymer binder, and a curing binder, and the second negative electrode mixture layer includes an adhesive binder and a water-soluble polymer binder.

Aspect 2) In aspect 1, in the first negative electrode mixture layer, the curing binder and the water-soluble polymer binder may be mutually cross-linked bonds.

Aspect 3) In aspect 1 or 2, the first negative electrode mixture layer may include 5 to 50 parts by weight of a curing binder based on 100 parts by weight of the water-soluble polymer binder included in the first negative electrode mixture layer.

Aspect 4) In any one of aspects 1 to 3, the first negative electrode mixture layer may include a curing binder and a water-soluble polymer binder in a content of 0.5 wt% to 1.5 wt% based on a total weight of the first negative electrode mixture layer.

Aspect 5) In any one of aspects 1 to 4, the first negative electrode mixture layer may include an adhesive binder in a content of 0.5 wt% to 5 wt%.

Aspect 6) In any one of aspects 1 to 5, the first negative electrode mixture layer may include an adhesive binder, a water-soluble polymer binder, and a curing binder in a total content of 1.0 to 6.5 wt%.

Aspect 7) In any one of aspects 1 to 6, a content of the water-soluble polymer binder included in the second negative electrode mixture layer may be greater than a content of the water-soluble polymer binder included in the first negative electrode mixture layer.

Aspect 8) In any one of aspects 1 to 7, the second negative electrode mixture layer may include a water-soluble polymer binder in a content of 0.5 to 1.5 wt% based on a total weight of the second negative electrode mixture layer.

Aspect 9) In any one of aspects 1 to 8, the second negative electrode mixture layer may include an adhesive binder in a content of 2.5 wt% or less based on the total weight of the second negative electrode mixture layer.

Aspect 10) In any one of aspects 1 to 9, the second negative electrode mixture layer may include an adhesive binder and a water-soluble polymer binder in a total content of 0.5 to 4.0 wt% based on the total weight of the second negative electrode mixture layer.

Aspect 11) In any one of aspects 1 to 10, the contents of the binders included in the second negative electrode mixture layer may be 25% more or less than the contents of the binders included in the first negative electrode mixture layer.

Aspect 12) In any one of aspects 1 to 11, the second negative electrode mixture layer may further include a curing binder.

Aspect 13) In aspect 12, the second negative electrode mixture layer may include 5 to 50 parts by weight of a curing binder per 100 parts by weight of a water-soluble polymer binder.

Aspect 14) In any one of aspects 1 to 13, the curing binder may be at least one selected from the group consisting of a carboxylic acid group-containing compound, an epoxy group-containing compound, a borate compound, and a thiol compound.

Aspect 15) A secondary battery may comprise the negative electrode described in any one of aspects 1 to 14.

## Claims

1. A negative electrode, comprising:
a negative electrode current collector;
a first negative electrode mixture layer on the negative electrode current collector; and
a second negative electrode mixture layer on the first negative electrode mixture layer,
wherein the first negative electrode mixture layer includes an adhesive binder, a water-soluble polymer binder, and a curing binder, and
the second negative electrode mixture layer includes an adhesive binder and a water-soluble polymer binder.

2. The negative electrode of claim 1, wherein in the first negative electrode mixture layer, the curing binder and the water-soluble polymer binder are mutually cross-linked bonds.

3. The negative electrode of claims 1 or 2, wherein the first negative electrode mixture layer includes 5 to 50 parts by weight of a curing binder based on 100 parts by weight of the water-soluble polymer binder included in the first negative electrode mixture layer.

4. The negative electrode of any one of claims 1 to 3, wherein the first negative electrode mixture layer includes a curing binder and a water-soluble polymer binder in a content of 0.5 wt% to 1.5 wt% based on a total weight of the first negative electrode mixture layer.

5. The negative electrode of any one of claims 1 to 4, wherein the first negative electrode mixture layer includes an adhesive binder in a content of 0.5 wt% to 5 wt%.

6. The negative electrode of any one of claims 1 to 5, wherein the first negative electrode mixture layer includes an adhesive binder, a water-soluble polymer binder, and a curing binder in a total content of 1.0 to 6.5 wt%.

7. The negative electrode of any one of claims 1 to 6, wherein a content of the water-soluble polymer binder included in the second negative electrode mixture layer is greater than a content of the water-soluble polymer binder included in the first negative electrode mixture layer.

8. The negative electrode of any one of claims 1 to 7, wherein the second negative electrode mixture layer includes a water-soluble polymer binder in a content of 0.5 to 1.5 wt% based on a total weight of the second negative electrode mixture layer.

9. The negative electrode of any one of claims 1 to 8, wherein the second negative electrode mixture layer includes an adhesive binder in a content of 2.5 wt% or less based on the total weight of the second negative electrode mixture layer.

10. The negative electrode of any one of claims 1 to 9, wherein the second negative electrode mixture layer includes an adhesive binder and a water-soluble polymer binder in a total content of 0.5 to 4.0 wt% based on the total weight of the second negative electrode mixture layer.

11. The negative electrode of any one of claims 1 to 10, wherein the contents of the binders included in the second negative electrode mixture layer is 25% more or less than the contents of the binders included in the first negative electrode mixture layer.

12. The negative electrode of any one of claims 1 to 11, wherein the second negative electrode mixture layer further includes a curing binder.

13. The negative electrode of claim 12, wherein the second negative electrode mixture layer includes 5 to 50 parts by weight of a curing binder per 100 parts by weight of a water-soluble polymer binder.

14. The negative electrode of any one of claims 1 to 13, wherein the curing binder is at least one selected from the group consisting of a carboxylic acid group-containing compound, an epoxy group-containing compound, a borate compound, and a thiol compound.

15. A secondary battery, comprising
the negative electrode described in any one of claims 1 to 14.
